**Europäisches Patentamt**

**European Patent Office**

**Office européen des brevets**

(11) Veröffentlichungsnummer: **0 004 602**
**A1**

## (12) EUROPÄISCHE PATENTANMELDUNG

(21) Anmeldenummer: **79100867.5**

(22) Anmeldetag: **22.03.79**

(51) Int. Cl.²: **C 04 B 25/02**
**C 04 B 21/08**

(30) Priorität: **06.04.78 DE 2814814**

(43) Veröffentlichungstag der Anmeldung:
**17.10.79 Patentblatt 79/21**

(84) Benannte Vertragsstaaten:
**CH DE FR GB**

(71) Anmelder: **BASF Aktiengesellschaft**
**Carl-Bosch-Strasse 38**
**D-6700 Ludwigshafen(DE)**

(72) Erfinder: **Woerner, Frank Peter, Dr.**
**Am Altenbach 18**
**D-6706 Wachenheim(DE)**

(72) Erfinder: **Mahnke, Harald, Dr.**
**Osloer Weg 48**
**D-6700 Ludwigshafen(DE)**

(72) Erfinder: **Weber, Heinz, Dr.**
**Am Wehrhaus 26**
**D-6718 Gruenstadt 1(DE)**

(72) Erfinder: **Sand, Hermann, Dr.**
**Im Sandgarten 11**
**D-6706 Wachenheim(DE)**

(72) Erfinder: **Trautz, Volker, Dr.**
**Rua Sao Matheus 299 Granja Julieta**
**Sao Paulo(BR)**

(72) Erfinder: **Geierhaas, Herbert, Dr.**
**Londoner Ring 2**
**D-6700 Ludwigshafen(DE)**

(54) **Nichtbrennbarer Dämmstoff.**

(57) Der nichtbrennbare Dämmstoff enthält anorganische Leichtpartikel und gegebenenfalls faserige oder körnige anorganische Zusatzstoffe, die durch organische polymere Bindemittel miteinander verbunden sind. Um die Entwicklung toxischer Gase im Brandfall zu unterdrücken, sind dem Dämmstoff 0,1 bis 15 Gewichtsprozent eine Verbindung eines Übergangsmetalls, vorzugsweise Kupfer(II)-oxid, Eisen-(III)-oxidhydrat, Eisen(II)-acetat oder Mangan(IV)-oxid zugemischt.

EP 0 004 602 A1

Croydon Printing Company Ltd.

BASF Aktiengesellschaft                    O.Z. 0050/033109

Nichtbrennbarer Dämmstoff

Die Erfindung betrifft nichtbrennbare Dämmstoffe für Bau-
und Isolierzwecke auf Basis von anorganischen Leichtpartikeln, die durch polymere organische Bindemittel miteinander verbunden sind. Solche Dämmstoffe sind z.B. in den
DE-OS 25 45 728 und 26 30 834 beschrieben. Im Brandfall
verbrennen oder verschwelen die organischen Bindemittel,
wobei sich je nach Temperatur und Luftzufuhr, sowie nach
Art und Menge des Bindemittels größere oder kleinere
Mengen toxischer Gase, z.B. CO oder HCN bilden können.
Damit die Dämmstoffe den in DIN 4102 festgelegten Anforderungen für Baustoffe der Klasse A 2 genügen, darf
der Gehalt an toxischen Gasen in den Verschwelungsprodukten bestimmte Werte nicht überschreiten.

Der Erfindung lag also die Aufgabe zugrunde, den Gehalt
an toxischen Gasen in den Verschwelungsprodukten von
Dämmstoffen herabzusetzen. Diese Aufgabe wird erfindungsgemäß durch den Zusatz von Übergangsmetallverbindungen
gelöst.

Gegenstand der Erfindung ist demzufolge ein nichtbrennbarer Dämmstoff, enthaltend

Dd/ro

A) 98,9 bis 50 Gew.% anorganischer Leichtpartikel,

B) 0 bis 40 Gew.% faseriger oder körniger anorganischer Zusatzstoffe,

C) 1 bis 30 Gew.% eines organischen, polymeren Bindemittels sowie

D) 0,1 bis 15 Gew.% einer Verbindung eines Übergangsmetalls.

Es kann angenommen werden, daß die Übergangsmetallverbindungen die Bildung und Weiterreaktion der aus den kohlenstoff- und stickstoffhaltigen Bindemitteln entstehenden Gase CO und HCN katalytisch beeinflussen. So ist z.B. eine Verschiebung des Boudouard-Gleichgewichtes $2CO \rightleftharpoons CO_2 + C$ und des Wassergas-Gleichgewichtes $CO + H_2O \rightleftharpoons CO_2 + H_2$ in Richtung auf eine $CO_2$-Bildung denkbar.

In Bezug auf die Art der Leichtpartikel A, der Zusatzstoffe B und der Bindemittel C unterscheiden sich die Dämmstoffe nicht wesentlich von den in den DE-OS 25 45 728 und 26 30 834 beschriebenen.

Die anorganischen Leichtpartikel A haben vorzugsweise einen mittleren Teilchendurchmesser zwischen 0,05 und 3 mm und eine Schüttdichte zwischen 30 und 150 g/l. Bevorzugt werden silikatische Materialien verwendet, wie wasserunlösliche Alkalisilikate oder Silikate der 2. und 3. Hauptgruppe des Periodensystems. Besonders bevorzugt sind geblähter Perlit oder Vermiculit geeignet sind aber auch geblähtes Schaumglas, Flugasche oder geblähter Gips.

Die Dämmstoffe können gegebenenfalls bis zu 40 Gew.% faseriger oder körniger anorganischer Zusatzstoffe B enthalten. Faserige Zusatzstoffe verbessern den Elastizitätsmodul der Baustoffe. Die Fasern sollen dabei eine Länge von 2 mm bis 3 cm aufweisen. Bevorzugt sind Glasfasern, die in Mengen von 2 bis 10 Gew.%, und Stein- oder Mineralwolle, die in Mengen von 5 bis 30 Gew.%, jeweils bezogen auf die Gesamtmischung, eingesetzt werden. Körnige Zusätze verbessern die Festigkeit der Baustoffe. Die Körner sollen einen Durchmesser von 1 bis 100 $\mu$m aufweisen. Bevorzugt sind Talkum oder Gips, die in Mengen von 15 bis 30 Gew.% eingesetzt werden.

Die Leichtpartikel und gegebenenfalls Zusatzstoffe sind durch 1 bis 30, vorzugsweise 2 bis 20 Gew.% eines organischen, polymeren Bindemittel C miteinander verbunden. Die Bindemittel sind vorzugsweise Polykondensate mit einer Dauergebrauchstemperatur nach DIN 53 466 von mehr als 100°C. Als Dauergebrauchstemperatur ist die Temperatur definiert, bei welcher der betreffende Stoff 25 000 Stunden an der Luft gelagert werden kann, ohne daß sich seine Eigenschaften erkennbar ändern. Prinzipiell können jedoch auch Polymerisate als Bindemittel eingesetzt werden.

Bei der Herstellung der Dämmstoffe werden bevorzugt 10 bis 85, vorzugsweise 40 bis 75 gew.%ige, vorzugsweise wäßrige Dispersionen oder Lösungen von zum hochpolymeren Bindemittel C aushärtbaren Vorkondensaten eingesetzt, die gegebenenfalls übliche Dispergierstabilisatoren, Vernetzungsmittel, Katalysatoren, Verlaufmittel oder andere Zusatzstoffe in geringen Mengen enthalten können. Die Vorkondensate härten bei erhöhten Temperaturen, gegebenenfalls in Gegenwart von Vernetzungsmitteln oder Vernetzungskatalysatoren unter Weiterkondensation bzw. Ver- netzung zum hochpolymeren Bindemittel C aus. Grundsätzlich können aber auch Dispersionen oder Lösungen von solchen Bindemitteln C eingesetzt werden, die bereits in hochmolekularer Form vorliegen.

Bevorzugte Bindemittel C sind Kondensate des Formaldehyds mit Phenol, Harnstoff und Melamin bzw. mit deren Derivaten, insbesondere ein Phenol/Formaldehyd-Kondensat, welches 1 bis 30 Gew.% eines Alkylphenol/Phenol/Formaldehyd-Kondensationsproduktes enthält. Gut geeignet sind ferner Polyesterimide, Polyamidimide, Polyimide, Polyester, Polyamide sowie Polymerisate von Acrylestern und Vinylestern, insbesondere Copolymerisate auf Basis von Vinylpropionat, Butylacrylat oder Äthylhexylacrylat.

Als Komponente D wird eine – vorzugsweise oxidierend wirkende –Verbindung eines Übergangsmetalls eingesetzt. Grundsätzlich können alle in Frage kommenden Verbindungen verwendet werden. Zweckmäßigerweise werden jedoch solche eingesetzt, die billig sind, selbst nicht toxisch sind und bei erhöhter Temperatur auch keine toxischen Gase liefern. Die Verbindungen sollen ferner vorzugsweise unter den Herstellbedingungen und Anwendungsbedingungen der Dämmstoffe stabil sein.

Bevorzugte Verbindungen sind solche des Eisens, Kupfers und Mangans; daneben haben sich auch Verbindungen des Vanadins, Chroms, Kobalts und des Zinks als wirksam erwiesen. Besonders bevorzugt sind die Substanzen FeO(OH), $MnO_2$, CuO, $Fe_2O_3$, $V_2O_5$, ZnO und CoO, ferner Eisen(III)-acetat, -acetylacetonat und Eisen(III)-oxalat, sowie Ferrocen. Außerdem können Mischungen dieser Substanzen miteinander oder mit $H_3BO_3$, $B_2O_3$ oder Borax verwendet werden.

Die Dämmstoffe können in der Praxisanwendung übliche Deck-, Schutz- und Verstärkungsschichten enthalten, wie z.B. aus Asbestzement, Gipskarton oder Metallblechen. Auch Verbund-Dämmstoffe nach den DE-OS 27 00 608 und 17 00 217 sollen hier mitumfaßt sein.

Die Dämmstoffe haben vorzugsweise eine Stärke von 10 mm bis 100 mm, insbesondere von 10 bis 60 mm. Ihre Dichte liegt vorzugsweise zwischen 70 und 300 g/l.

Die Herstellung der Dämmstoffe geschieht vorzugsweise nach den in den DE-OS 26 31 727 bzw. 26 30 834 beschriebenen Verfahren durch Vermischen von anorganischen Leichtpartikeln A und ggf. Zusatzstoffen B mit einer wäßrigen Dispersion oder Lösung des Bindemittels C bzw. eines zum Bindemittel C aushärtbaren Vorkondensats, Trocknen und Verpressen der Mischung sowie ggf. Aushärten.

Es hat sich als zweckmäßig erwiesen, bei der Herstellung der Dämmstoffe die Übergangsmetallverbindung D als Feststoff zusammen mit den anorganischen Leichtpartikeln A einzumischen.

Die in den Beispielen genannten Teile und Prozente beziehen sich auf das Gewicht.

In den Beispielen wurden jeweils 60 x 2 x 1,5 cm große Proben der Dämmstoffe getestet. Sie wurden in Anlehnung an DIN 53 436 E in einem Verschwelungsrohr bei 400°C Vergleichskörpertemperatur in einem Luftstrom von 300 l/h verschwelt. Die in den Verschwelungsgasen enthaltenen Mengen an CO, $CO_2$ und HCN wurden mittels Adsorptionsröhrchen der Fa. Dräger bestimmt.

In den Beispielen wurden Dämmplatten folgender Zusammensetzung eingesetzt:

Tabelle 1

Zusammensetzung der Dämmplatten

| Platte | Zusammensetzung der Mischung A+B+C |
|---|---|
| a | 85 % geblähter Perlit (mittlerer Teilchendurchmesser 0,7 mm, Schüttdichte 50 g/l) |
| | 14 % Phenolharz (Verhältnis Phenol : Formaldehyd = 1 : 1,4) |
| | 1 % Nonylphenol/Phenol/Formaldehyd-Kondensationsprodukt (0,7 : 0,3 : 2) |
| | (Harze mit p-Toluolsulfonsäure gehärtet) |
| b | 85 % geblähter Perlit |
| | 15 % Harnstoff/Formaldehyd-Harz (1 : 1,65) |
| | (Harz mit Ammonchlorid gehärtet) |
| c | 85 % geblähter Perlit |
| | 15 % modifiziertes Melaminharz (aus 22 % Melamin, 28 % Harnstoff, 8 % Phenol und 42 % Formaldehyd) |
| d | 85 % geblähter Perlit |
| | 14 % Acrylatharz (aus Äthylhexylacrylat, Methylmethacrylat, Acrylsäure und Acrylnitril) |
| | 1 % Nonylphenol/Phenol/Formaldehyd-Harz |
| e | 92 % geblähter Perlit |
| | 8 % Polyesterimid-Harz (aus Terephthalsäure, Trimellithsäureanhydrid, Glykol, Diaminodiphenylmethan und Trishydroxyäthylisocyanurat) |

BASF Aktiengesellschaft — 7 — O.Z. 0050/033109

Bei der Herstellung der Platten wurden auf 100 Teile der Mischungen die in den Beispielen angegebenen Mengen an Zusatzstoffen D zugesetzt.

## Beispiel 1

Es wurden Dämmplatten entsprechend der Zusammensetzung a hergestellt, wobei wechselnde Mengen verschiedener Zusatzstoffe zugesetzt wurden. Die Platten wurden der oben beschriebenen Verschwelung unterworfen und die entstehenden Gase gemessen. Ergebnisse siehe Tabelle 2.

## Tabelle 2 (Typ a)

| Versuch | Zusatz D | Teile | CO (ppm) | $CO_2$ (ppm) |
|---|---|---|---|---|
| 1 | — | — | 7 800 | 7 900 |
| 2 | CuO (40%ig auf $Al_2O_2$) | 1 | 5 300 | 9 600 |
| 3 | FeO (OH) | 5 | 5 400 | 9 600 |
| 4 | $Fe_2O_3$ | 5 | 5 900 | 11 100 |
| 5 | $Fe_3O_4$ | 5 | 6 600 | 8 700 |
| 6 | Fe(III)-Acetat | 5 | 3 600 | 12 700 |
| 7 | $Fe_2(SO_4)_3$ | 15 | 5 900 | 9 700 |
| 8 | Fe(II)-Oxalat | 5 | 6 300 | 13 300 |
| 9 | Fe(III)-Acetylacetonat | 5 | 5 300 | 15 300 |
| 10 | Ferrocen | 5 | 5 900 | 14 300 |
| 11 | $MnO_2$ | 2,5 | 5 800 | 10 000 |
| 12 | $MnO_2$/CuO (60:40) | 1 | 5 800 | 10 000 |
| 13 | FeO (OH)/Borax (1:1) | 5 | 5 800 | 9 300 |

<u>Beispiele 2 bis 5</u>

Dämmplatten der Typen b bis e wurden mit verschiedenen Zusätzen D hergestellt und geprüft. Ergebnisse siehe Tabelle 3.

<u>Tabelle 3</u>

| Bei-spiel | Typ | Zusatz | Teile | CO (ppm) | $CO_2$ (ppm) | HCN (ppm) |
|---|---|---|---|---|---|---|
| 2/1 | b | – | – | 1 000 | 1 000 | 150 |
| 2/2 | b | CuO auf $Al_2O_3$ | 1 | 500 | 1 000 | 10 |
| 3/1 | c | – | 1 | 1 000 | 1 000 | 150 |
| 3/2 | c | CuO auf $Al_2O_3$ | 1 | 500 | 2 000 | 20 |
| 4/1 | d | – | – | 3 700 | 5 800 | 50 |
| 4/2 | d | CuO auf $Al_2O_3$ | 1 | 3 200 | 10 000 | 5 |
| 4/3 | d | FeO(OH) | 5 | 1 800 | 9 000 | 30 |
| 5/1 | e | – | – | 1 000 | 1 800 | 50 |
| 5/2 | e | CuO auf $Al_2O_3$ | 1 | 1 000 | 3 700 | 5 |

0004602

<u>Patentansprüche</u>

1. Nichtbrennbarer Dämmstoff enthaltend

A) 98,9 bis 50 Gew.% anorganische Leichtpartikel,

B) 0 bis 40 Gew.% faseriger oder körniger anorganischer Zusatzstoffe,

C) 1 bis 30 Gew.% eines organischen, polymeren Bindemittels,

<u>gekennzeichnet durch</u> den Zusatz von

D) 0,1 bis 15 Gew.% einer Verbindung eines Übergangsmetalls.

2. Nichtbrennbarer Dämmstoff nach Anspruch 1, <u>dadurch gekennzeichnet</u>, daß die anorganischen Leichtpartikel A geblähter Perlit oder Vermiculit sind.

3. Nichtbrennbarer Dämmstoff nach Anspruch 1, <u>dadurch gekennzeichnet</u>, daß die Zusatzstoffe B Glasfasern einer Länge zwischen 2 mm und 5 cm sind.

4. Nichtbrennbarer Dämmstoff nach Anspruch 1, <u>dadurch gekennzeichnet</u>, daß die Bindemittel C Polykondensate sind.

5. Nichtbrennbarer Dämmstoff nach Anspruch 1, <u>dadurch gekennzeichnet</u>, daß die Bindemittel C Kondensate des Formaldehyds mit Phenol, Harnstoff, Melamin oder deren Derivaten sind.

6. Nichtbrennbarer Dämmstoff nach Anspruch 1, dadurch gekennzeichnet, daß die Übergangsmetallverbindung D eine Verbindung des Eisens, Kupfers, Mangans, Kobalts, Vanadins, Chroms oder Zinks ist.

7. Nichtbrennbarer Dämmstoff nach Anspruch 1, dadurch gekennzeichnet, daß die Übergangsmetallverbindung D Kupfer(II)-oxid, Eisen(III)-oxidhydrat, Eisen(III)--acetat oder Mangan(IV)-oxid ist.

0004602

## Europäisches Patentamt

# EUROPÄISCHER RECHERCHENBERICHT

Nummer der Anmeldung

EP 79 10 0867

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 236 893 (FERRO CORP.) <br><br> * Seite 3, Zeile 39 bis Seite 4, Zeile 1; Seite 4, Zeilen 6-8; Seite 5, Zeilen 19-36; Seite 6, Zeilen 12-16 * <br><br> -- | 1,4-7 |
|  | US - A - 3 933 731 (S.M. TAKASAKI et al.) <br><br> * Zusammenfassung; Spalte 2, Zeilen 47-68; Spalte 3, Zeilen 35-40,55-62 * <br><br> -- | 1,4-7 |
|  | GB - A - 1 158 591 (C.A. REDFARN) <br> * Seite 2; Ansprüche 1,2,5,6,9 * <br><br> -- | 1,2,4, 5 |
| A | GB - A - 1 080 468 (BURNS & RUSSELL) <br><br> ---- | |

### KLASSIFIKATION DER ANMELDUNG (Int.Cl.²)

C 04 B 25/02
      21/08

### RECHERCHIERTE SACHGEBIETE (Int. Cl.²)

C 04 B 25/00
      21/00
      43/00
C 09 K  3/00
C 08 K  3/00
      5/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-07-1979 | DAELEMAN |

EPA form 1503.1  06.78